# EUROPEAN PATENT APPLICATION

(11) **EP 3 593 631 A1**
(43) Date of publication of application: **15.01.2020**
(21) Application number: 18183200.7
(22) Date of filing: 12.07.2018
(51) Int. Cl.: A01G 18/20

(54) **PRODUCTION PROCESS AND COMPOSITION OF CASING MATERIAL FOR GROWING MUSHROOMS**

(71) Applicant: Bromyc B.V., 6596 MA Milsbeek (NL); Newfoss Holding B.V., 5411 RJ Zeeland (NL)
(72) Inventor: Van Boekel, Gerardus Henricus Cornelis, 5411 RJ Zeeland (NL); Van der Horst, Hélène Caroline, 6596 MA Milsbeek (NL)
(74) Representative: De Vries & Metman

(57) **Abstract**

Casing material for growing mushrooms comprising a biomass of plant origin treated to remove cell content, e.g., by extraction in an aqueous slurry. The biomass may comprise non-woody lignocellulosic biomass, such as mown field vegetation, such as mown grass from lawns, verges or pastures, and/or grass-type vegetation. The treated biomass is mixed with marl and/or lime and/or peat.

## Description

The invention relates to a composition of casing material for growing mushrooms, and to a process for the production of such casing material.

Mushrooms are grown on a compost substrate, e.g., comprising a mixture of horse manure, straw, poultry manure and lime. After conditioning the mushroom compost, it is inoculated with spawn comprising mycelium of a selected mushroom strain. The mycelium colonizes the compost material. After full colonization, the compost is delivered to a mushroom farm. Here, the mycelium colonized compost is applied in layers and covered by a layer of casing material.

The casing material layer is a substrate for further colonization by the mycelium in the compost and for forming the fruiting bodies or mushrooms. The casing layer comprises microbes inducing pinning of mycelium. The casing layer also holds water consumed by the mycelium during growth and during fruiting. The composition and structure of the casing soil must be carefully attuned to these functions.

Casing layers typically contain a mixture of one or more types of peat, marl and/or sugar factory lime. Peat is extracted from soil in environmentally sensitive areas. This peat extraction is not sustainable and enhances greenhouse gas emissions, in particular CO2. Therefore, and in view of the large economic demand for peat for other applications, there is a need to reduce the amount of peat needed for the production of casing soil for growing mushrooms.

It has been proposed to replace peat at least partly by recycled champost, coconut fibers or fermented grass. So far this has not resulted in the same mushroom yields as achievable with peat-based casing soil.

The object of the invention is achieved with a casing material comprising a biomass of plant origin treated to remove cell content. The biomass may for example comprise non-woody lignocellulosic biomass, such as mown field vegetation, e.g., one or more grasses, such as mown grass from lawns, verges or pastures, and/or grass-type vegetation. Surprisingly it was found that such biomass is a very suitable substitute for peat in casing soil, resulting in mushroom yields comparable to yields usually achieved with casing soils based on peat.

The biomass can for example be pretreated by slurrying the biomass - e.g., after silaging - in an aqueous phase, preferably after washing the biomass with water. Optionally, slurrying may be followed by cutting the biomass. The slurry is maintained for less than 24 hours. During that time microbiological extraction takes place in an acidic environment, having a pH below 7, e.g., a pH of 4 - 6. Optionally, the biomass may be washed or rinsed in one or more washing steps and/or dried e.g. by pressing to remove the extracted components. This results in a fibrous biomass where components such as sugars, protein, salts and minerals are removed to a high degree and with relatively low nutritional value. It was surprisingly found that using casing soil on basis of such biomass results in good yields of mushrooms.

Subsequently, the treated biomass may be sterilized, e.g., by infrared treatment or in a thermal screw conveyer heated by steam or oil to a temperature of at least 70 °C for at least 20 minutes. Another suitable process for sterilization of casing material is for instance disclosed in US 4,978,501 and CA 1,298,952.

After sterilization, the pretreated field vegetation is mixed with the other components of the casing material. The mixture is then stored, e.g., for a day, to allow colonization of the mown field vegetation by the desired microbes, already present in the used peat.

Alternatively, the biomass may for example comprise silage grass, in particular silage grass which has been silaged for at least 3 months, e.g., at least 6 months or longer. Silage grass is a fermented, high-moisture grass product, usually fed to cattle. It is fermented in an ensilage process in a silo or pit. The grass in the silo is compressed so as to purge as much oxygen as possible, and then covered with a plastic sheet.

The biomass may for example include herbaceous or non-woody lignocellulosic biomass, such as mown field vegetation, such as one or more grasses, such as mown grass from lawns, verges or pastures, and/or grass-type vegetation. Other suitable grass species include for example Anomochlooideae, Pharoideae, Puelioideae, Pooideae (including wheat, barley, oats, brome-grass, reed-grasses), Ehrhartoideae (e.g., rice), Aristidoideae, Arundinoideae, (e.g., giant reed and common reed), Chloridoideae, Panicoideae (e.g., panic grass, maize, sorghum, sugarcane, most millets, fonio, and bluestem grasses), Micrairoideae and/or Danthonioideae. For instance, the lignocellulosic content may be at most 20 wt.% on total weight of the biomass before treatment.

Besides grass-type biomass, other types of herbaceous vegetation, such as leaves and stems from horticultural or agricultural produce, may also be used.

The used grass blades may have any suitable average blade length, for example up to 50 cm, e.g., up to 100 mm, e.g., up to 20 mm, e.g., at least 5 mm.

Good results are obtained if the biomass, e.g., the mown field vegetation, is first silaged before the slurry treatment.

After treatment the biomass may for example have an electro-conductivity ec of at most 2 dS/m, e.g., at most 1 dS/m, e.g., at most 0,5 dS/m, e.g., between 0,2 - 0,5 dS/m (measured in accordance with NEN-EN 13038).

The oxygen uptake rate (OUR) is an indicative parameter for the nutritional value of soil improvers. After treatment the OUR of the mown field vegetation may for example be below 10 mg O2/kgh(determined in accordance with NEN-EN 16087-2-2011).

The treated biomass is a fibrous mass. This is indicated by the high content of organic matter in the dry solids content of the biomass. For instance, the treated biomass may have an organic content of at least 85 %, e.g., at least 90 %, e.g., at least 94 % by weight of the dry solids content of the biomass (EN 13039, 2007).

The biomass may completely replace the peat content in a regular casing soil material, or it may be used in combination with peat, only partly replacing it. Mixing the biomass with peat has the advantage that the biomass can be recolonized by the desired microbes coming from the peat, which is particularly useful if the treated biomass has been hygienized.

Suitable types of peat include, among others, wet and dry black peat, white peat, garden peat and/or brown sphagnum peat.

The casing material may further comprise marl and/or lime, such as sugar factory lime. These compounds are added to bring the pH to a level of about 6 - 7.

The casing material can be prepared by mixing the mown field vegetation with marl and/or lime and/or peat. Usually, the marl or lime content will roughly be about 10 vol% by total weight of the casing material. The marl or lime content can be adjusted to achieve a desired bulk density and moisture content.

The finished casing material preferably has a pH of at least 5,5. E.g., at most 7,5, e.g., in the range of 6 - 7, e.g., 6 - 6,8. A pH below 6,8 will substantially stop formation of free ammonia.

Good results are obtained if the casing material has a moisture content of at least 45 vol%, e.g., at least 50 vol% on total volume.

To optimize gas exchange (O2, CO2) for respiration, the air content of the casing material may for example be at least 20 vol% on total volume.

Transport of air and water through the casing material is optimized if the porosity of the casing material is above 50vol% by total volume of the casing material.

### Comparative Examples A and B

Comparative Examples A and B are reference examples showing the average yield when a prior art casing material is used. In these examples, 6 beds were tested. The average yields of these beds are shown in Table 1 below.

In Comparative Example A, beds of inoculated phase III compost with a surface of 1,5 m² was covered with a prior art casing material, commercially available as "Basismix" from CNC Grondstoffen BV, Milsbeek, the Netherlands (comprising 90 vol% peat and 10 vol% lime). The compost was inoculated with Agaricus bisporus to grow white button mushrooms. The mushrooms were harvested in three flushes (a flush appearing approximately once a week).

In Comparative Example B, the test was repeated but 60 wt% of the casing material was replaced by spent mushroom compost. The EC of the spent mushroom compost was decreased by rinsing with water until the EC of the casing mixture was 1 dS/m.

**Table 1**

| | First flight (g/m²) | Second flight (g/m²) | Third flight (g/m²) | Total (g/m²) |
|---|---|---|---|---|
| Comp. ex. A | 15854 | 13409 | 4832 | 34095 |
| Comp. ex. B | 10488 | 13523 | 4157 | 28168 |

### Examples 1 - 3

The test of the Comparative Examples was repeated using casing material according to the present invention. This casing material was a mix of the casing material of Comparative example A and pretreated silage of mown pasture grass.

The silage was dispersed in water to form a slurry. The slurry was maintained for less than 24 hours. The biomass was then dewatered using a screen, washed and dried by pressing. The extraction liquid had a pH of about 3 - 5.

In Examples 1 and 2 the slurry was dewatered until a biomass was obtained with a dry solid content of 38,1 wt%, an Ec < 0,5 dS/m and a pH of 6,4.

In Example 3 the slurry was dewatered until a biomass was obtained with a dry solid content of 13,7 wt%, an Ec < 0,2 dS/m and a pH of 5,1.

In all Examples the resulting dewatered grass product was hygienized by a heat treatment using steam for a period of about 12 hours at a temperature T > 60°C. In all examples, the oxygen uptake rate OUR was below 10 mgO2/kgh.

In a next step the hygienized grass product was mixed with peat and sugar beat lime. The amount of lime was adjusted to obtain a casing material with about the same moisture content as the peat-based casing material of Comparative Example A. The moisture content in Comparative Example A was about 47 vol %. To obtain the same values in Example 1, the lime content in Example 1 was about 10 vol%. The peat content was about vol wt% (same type of peat as used in Comparative example A), while the content of treated grass was about 27 vol%.

In Example 2 the peat content was about 36 vol% (same type of peat as used in Comparative example A), while the content of treated grass was about 54 vol%. The lime content was about 10 vol%.

In Example 3 the same mixing ratios were used as in Example 5, but now using a grass product having a dry solids content of 13,7 wt% (on total weight of the grass product).

The mixed casing materials were laid to rest for one day. After a day, the mixture was sufficiently colonized by the desired microbes and ready for use.

A bed of inoculated phase III compost with a surface of 1,5 m² was covered with the casing material of Examples 1, 2 and 3, respectively, in the same way as described above for Comparative Example A. The compost was inoculated with Agaricus bisporus to grow white button mushrooms. The mushrooms were harvested in three flushes. The yields are shown in table 2. The rightmost column of this table shows the yields as a percentage of the yields obtained in Comparative Example A.

**Table 2**

| | First flight (g/m²) | Second flight (g/m²) | Third flight (g/m²) | Total (g/m²) | %-age Comp. Ex. A |
|---|---|---|---|---|---|
| Example 1 | 17850 | 11293 | 3902 | 33045 | 96,9 % |
| Example 2 | 15979 | 11660 | 4545 | 32184 | 94,4 % |
| Example 3 | 17979 | 12182 | 3988 | 34149 | 100,2 % |

As shown in the two tables, the yields in Examples 1, 2 and 3 are of the same order as in Comparative example A, and substantially better than in Comparative Example B.

## Claims

1. Casing material for growing mushrooms, the casing material comprising a biomass of plant origin treated to remove cell content.

2. Casing material of claim 1, wherein the biomass comprises non-woody lignocellulosic biomass, such as mown field vegetation, e.g., one or more grasses, such as mown grass from lawns, verges or pastures, and/or grass-type vegetation.

3. Casing material of claim 1 or 2 wherein the biomass has an oxygen uptake rate (OUR) below 10 mgO2/kgh.

4. Casing material according to any preceding claim, wherein the biomass has an electro-conductivity ec of at most 2 dS/m, e.g., at most 1 dS/m.

5. Casing material according to any preceding claim, wherein the treatment for removal of cell content comprises the consecutive steps of slurrying the biomass in an aqueous phase, allowing extraction of the cell contents, and subsequent dewatering of the biomass.

6. Casing material according to any preceding claim, further comprising marl and/or lime, such as sugar factory lime.

7. Casing material of any preceding claim, further comprising peat.

8. Casing material according to any preceding claim, having a moisture content of at least 45 vol% on total volume and/or an air content of the casing material of at least 20 vol% on total volume and/or a porosity above 50 vol% by total volume of the casing material.

9. Casing material according to any preceding claim, wherein at least part of the biomass is silage.

10. Process of preparing a casing material for growing mushrooms, the process comprising the steps of treating biomass of plant origin to remove cell content and mixing the treated biomass with marl and/or lime and/or peat.

11. Process according to claim 10, wherein the biomass is treated by the following process steps:
- dispersing the biomass in an aqueous phase to form a slurry;
- maintaining the slurry at conditions suitable for extraction of cell contents without full digestion of lignocellulosic content;
- recovering the biomass from the aqueous phase.

12. Process according to claim 11, wherein the slurry is maintained for less than 24 hours.

13. Process according to claim 11 or 12, wherein the biomass is washed to remove extracted cell content.

14. Process according to claim 11, 12 or 13 wherein the recovered biomass is subsequently hygienized, optionally after a washing and/or drying step.

15. Process according to any one of claims 11-14, wherein the biomass comprises silaged mown field vegetation, e.g., silaged grass.
